# EUROPEAN PATENT APPLICATION

(11) **EP 3 288 230 A1**
(43) Date of publication of application: **28.02.2018**
(21) Application number: 15889711.6
(22) Date of filing: 13.10.2015
(51) Int. Cl.: H04L 29/06

(54) **FRAMEWORK AND METHOD FOR REALIZING MULTIMEDIA COMMUNICATION, FUSION EQUIPMENT AND UE**

(30) Priority: 24.04.2015 CN 201510202347; 15.05.2015 CN 201510249487
(71) Applicant: ZTE Corporation, Shenzhen, Guangdong 518057 (CN)
(72) Inventor: GAO, Yang, Shenzhen Guangdong 518057 (CN)
(74) Representative: Lavoix
(86) International application number: PCT/CN2015/091863
(87) International publication number: WO 2016/169225

(57) **Abstract**

Disclosed are a framework and method for realizing multimedia communication, fusion equipment and a UE. The method comprises: a first communication terminal utilizes obtained media description to establish a signaling plane with a second communication terminal via a register server, and the fusion equipment establishes a media plane with the second communication terminal.

## Description

### TECHNICAL FIELD

The present disclosure relates to, but is not limited to, a multimedia communication technology.

### BACKGROUND

A multimedia communication is always a goal in the communication field and constantly improved. In the background of 4G, technologies like Voice over LTE (VoLTE) or Rich Communication Suit (RCS) bring a window of opportunity for mobile users to use the multimedia communication widely.

The current mobile devices (User Equipment (UE)) like a mobile phone, especially a smartphone, have been equipped with capabilities of front-facing camera and video streaming. That is, video calling already can be realized on the UE. However, due to the limitations of hardware device and multimedia capability of the mobile equipment, a large-screen and high-definition multimedia communication cannot be experienced.

In the future, the capability of multimedia communication such as the communication supporting a holographic projection, cannot be built or carried merely by a simple mobile device.

The 3GPP presents, in its research report 23.893, switching an IP Multimedia Subsystem (IMS) session among multiple devices. However, this has the following disadvantages. Application Server (AS) control needs to be added in an IMS core network. The multiple devices are independent SIP devices to be registered and authenticated in the IMS. Whereas in many cases, a new intelligent device does not support the registration in the IMS. For example, the new intelligent device does not support ISIM identity (the SIM card). Such a way of realizing a multimedia session and centralized control in a single device causes a large and complex multimedia device and is complex to be implemented.

### SUMMARY

The following is an overview of theme elaborated in this application. The overview is not intended to limit the scope of protection of the claims.

This application provides a framework and method for realizing multimedia communication, a converging device and a user equipment (UE), which can realize multimedia communication.

A frame for realizing multimedia communication includes a first communication terminal, a second communication terminal, a converging device, and a register server.

The first communication terminal is configured to utilize a media description from the converging device to initiate a call request to the register server, and upon reception of a call answer, establish a signaling plane between the first communication terminal and the second communication terminal.

The converging device is configured to send the media description to the first communication terminal, and establish a media plane between the converging device and the second communication terminal.

The register server is configured to notify the second communication terminal of the call request upon reception of the call request, and forward the call answer from the second communication terminal to the first communication terminal.

The second communication terminal is configured to return the call answer to the register server, establish the signaling plane with between the second communication terminal and the first communication terminal, and establish the media plane between the second communication terminal and the converging device.

Optionally, the first communication terminal is further configured to, when a multimedia communication needs to be established, initiate a query request to the converging device. Correspondingly, the converging device is further configured to return the media description to the first communication terminal upon reception of the query request from the first communication terminal.

Alternatively, the converging device is further configured to actively push the media description to the first communication terminal.

Optionally, the framework further includes a peripheral device of the converging device.

The converging device is further configured to, upon reception of the query request from the first communication terminal, interact with the peripheral device of the converging device to obtain a media parameter, and forward a multimedia stream to the peripheral device of the converging device.

The peripheral device of the converging device is configured to provide the media parameter to the converging device, and render the content of the obtained media stream.

Optionally, the first communication terminal is further configured to, when a call has been successfully established and the media plane is established between the first communication terminal and the second communication terminal, and a call switchover is to be performed, initiate the query request to the converging device to which the call is currently to be switched, and initiate a switchover request to the register server upon obtaining of the media description. The first communication terminal is further configured to, upon reception of a switchover acknowledgement, establish the signaling plane between the first communication terminal and the second communication terminal. Then, the media plane is switched to the converging device to which the call is currently to be switched.

The register server is further configured to, upon reception of the switchover request, notify the second communication terminal of the switchover request, and forward the switchover acknowledgement from the second communication terminal to the first communication terminal.

Optionally, the converging device is further configured to, when a media is already rendered in the converging device, render the current media together with the existing media upon establishment of the signaling plane and the media plane.

Optionally, if the second communication terminal establishes the call through the converging device, the media plane is established between the converging device of the first communication terminal and the converging device of the second communication terminal.

Optionally, the call request also carries a media plane description of the first communication terminal.

The media plane is further established between the first communication terminal and the second communication terminal.

Optionally, the media plane includes one or more media stream.

Optionally, the first communication terminal is an UE.

the second communication terminal is an UE or a media server.

Optionally, the UE is a communication enabled UE of a terminal type.

The converging device is multimedia enabled, Near Field Communication (NFC) enabled and remote communication enabled. Alternatively, the converging device is multimedia enabled and the NFC enabled, but is not remote communication enabled. At this point, the converging device is set in the UE as a functional unit.

Optionally, the first communication terminal is connected to the converging device through a first control interface. The first control interface is used by the first communication terminal to control the converging device.

The second communication terminal is connected to the converging device through a first media interface.

Optionally, when the second communication terminal is the UE, the first media interface adopts a Real-time Transport Protocol (RTP) or a Secure Real-time Transport Protocol (SRTP).

When the second communication terminal is the media server, a second media interface adopts a streaming media or a media stream.

Optionally, the peripheral device of the converging device is multimedia enabled and the NFC enabled.

When the converging device is set in the UE as the functional unit, the peripheral device of the converging device is remote communication enabled.

Optionally, the peripheral device of the converging device is connected to the converging device through a second control interface. The second control interface is used by the converging device to control the peripheral device of the converging device.

Optionally, the second media interface used for forwarding the media is also set between the converging device and the peripheral device of the converging device.

Optionally, there is one or more converging device.

Optionally, there are two or more than two converging devices. The converging devices are connected to each other through a third control interface. The third control interface is used for synchronous control of the media streams among the converging devices.

A converging device includes a first control module and a first media processing module.

The first control module is configured to send the media description to the first communication terminal.

The first media processing module is configured to establish the media plane between the converging device and the second communication terminal upon establishment of the call.

Optionally, the first control module is configured to, upon reception of the query request from the first communication terminal, return the media description to the first communication terminal

Alternatively, the first control module is configured to actively push the media description to the first communication terminal.

Optionally, the converging device further includes a second control module.

The first control module is further configured to, upon reception of the query request from the first communication terminal, notify the second control module of the query request.

The second control module is configured to interact with the peripheral device of the converging device to obtain the media parameter and return the obtained media parameter to the first control module.

Optionally, the converging device further includes a second media processing module. The second media processing module is configured to perform media forwarding between the converging device and the peripheral device of the converging device.

Optionally, the converging device further includes a third control module. The third control module is configured to perform synchronous control of the media streams among the other connected converging devices.

A terminal includes a transceiver module and a processing module.

The transceiver module is configured to utilize the media description from the converging device to initiate the call request to the register server, and upon reception of a call answer, output a first notice to the processing module.

The processing module is configured to establish the signaling plane between said terminal and the second communication terminal upon reception of the first notice.

Optionally, the transceiver module is further configured to, when a multimedia communication is to be established, initiate the query request to the converging device.

Optionally, the transceiver module is further configured to initiate the query request to the converging device to which the call is currently to be switched, initiate the switchover request to the register server upon obtaining of the media description, and output a second notice upon reception of the switchover acknowledgement.

The processing module is further configured to, upon reception of the second notice, establish the signaling plane between the terminal and the second communication terminal. Then, the media plane is switched to the converging device to which the call is currently to be switched.

Optionally, the call request also carries the media plane description of the terminal to which the transceiver module belongs.

The processing module is further configured to establish the media plane between said terminal and the second communication terminal.

A method for realizing multimedia communication includes the following steps. The first communication terminal utilizes the obtained media description to establish the signaling plane between the first communication terminal and the second communication terminal via the register server. The converging device establishes the media plane between the converging device and the second communication terminal.

Optionally, before the first communication terminal utilizes the obtained media description to establish the signaling plane between the first communication terminal and the second communication terminal via the register server. The method further includes when a multimedia communication is to be established, initiating, by the first communication terminal, the query request to the converging device and obtaining the media description;

or, receiving, by the first communication terminal, the media description actively pushed by the converging device.

Optionally, initiating the query request to the converging device and obtaining the media description includes the following steps. The first communication terminal sends a media description query request to the converging device; and the converging device returns the media description to the first communication terminal.

Optionally, establishing the signaling plane and the media plane includes the following steps.

The first communication terminal utilizes the obtained media description to initiate the call request to the second communication terminal via the register server.

The first communication terminal receives the call answer returned from the second communication terminal via the register server. A call is established between the first communication terminal and the second communication terminal. The signaling plane is established between the first communication terminal and the second communication terminal. The media plane is established between the converging device and the second communication terminal.

Optionally, the call request also carries the media plane description of the first communication terminal.

The method further includes establishing the media plane between the first communication terminal and the second communication terminal.

Optionally, when a call has been successfully established and the medial plane is established between the first communication terminal and the second communication terminal, and the call switchover is to be performed, the method further includes the following steps.

The first communication terminal initiates the query request to the converging device to which the call is currently to be switched, and upon reception of obtaining of the media description, initiates the switchover request to the register server. Upon reception of the switchover acknowledgement forwarded from the second communication terminal via the register server, the first communication terminal establishes the signaling plane between the first communication terminal and the second communication terminal. Then, the media plane is switched to the converging device to which the call is currently to be switched.

Optionally, when the converging device receives the query request from the first communication terminal, the method further includes interacting, by the converging device, with the peripheral device of the converging device to obtain the media parameter.

Optionally, after the first communication terminal establishes the signaling plane with the second communication terminal, and the converging device establishes the media plane with the second communication terminal, the method further includes performing, by the converging device, media forwarding between the converging device and the peripheral device of the converging device.

Optionally, there is one or more converging device.

Optionally, there are two or more converging devices.

The established media plane includes two or more than two media streams. The establishment of the media plane between the converging device and the second communication terminal includes: different media streams being respectively established between the second communication terminal and the converging device corresponding to each media stream.

Optionally, the method further includes synchronizing the media streams among multiple converging devices.

Optionally, when a media is already rendered in the converging device before the first communication terminal establishes the signaling plane between the first communication terminal and the second communication terminal, and the converging device establishes the media plane between the converging device and the second communication terminal,

upon establishment of the signaling plane and the media plane are established, the method further includes rendering, by the converging device, the current media together with the existing media.

A computer readable storage medium is provided, in which a computer executable instruction is stored. The computer executable instruction is used for performing the above method.

Compared with the related art, according to the embodiments of the disclosure, the first communication terminal utilizes the obtained media description to establish the signaling plane between the first communication terminal and the second communication terminal via the register server. The converging device establishes the media plane between the converging device and the second communication terminal. According to the method of the disclosure, the multimedia communication is easily implemented by separating control from media.

Other aspects may be appreciated upon reading and understanding the accompanying drawings and detailed descriptions.

### BRIEF DESCRIPTION OF DRAWINGS

Fig. 1 is a schematic diagram of a framework for realizing multimedia communication according to an embodiment of the disclosure;
Fig. 2 is a structure diagram of a converging device according to an embodiment of the disclosure;
Fig. 3 is a structure diagram of a piece of UE according to an embodiment of the disclosure;
Fig. 4 is a flowchart of a method for realizing multimedia communication according to an embodiment of the disclosure;
Fig. 5 is a flowchart of the first embodiment about establishing a converging device call according to the disclosure;
Fig. 6 is a flowchart of the second embodiment about establishing a converging device call according to the disclosure;
Fig. 7 is a flowchart of the third embodiment about establishing a converging device call according to the disclosure;
Fig. 8 is a flowchart of the fourth embodiment about establishing a converging device call according to the disclosure;
Fig. 9 is a flowchart of the fifth embodiment about establishing a converging device call according to the disclosure;
Fig. 10 is a flowchart of the sixth embodiment about establishing a converging device call according to the disclosure;
Fig. 11 is a flowchart of the seventh embodiment about establishing a converging device call according to the disclosure;
Fig. 12 is a flowchart of the first embodiment about media plane switchover in a converging device call according to the disclosure;
Fig. 13 is a flowchart of the second embodiment about media plane switchover in a converging device call according to the disclosure;
Fig. 14 is a schematic diagram of another framework for realizing multimedia communication according to an embodiment of the disclosure; and
Fig. 15 is a flowchart of an embodiment about establishing a converging device call based on the framework shown in Fig. 14 according to the disclosure.

### DETAILED DESCRIPTION

Embodiments of the present disclosure are elaborated below with reference to the accompanying drawings. It should be noted that, the embodiments of the disclosure and the characteristics in the embodiments can be combined under the condition of no conflicts.

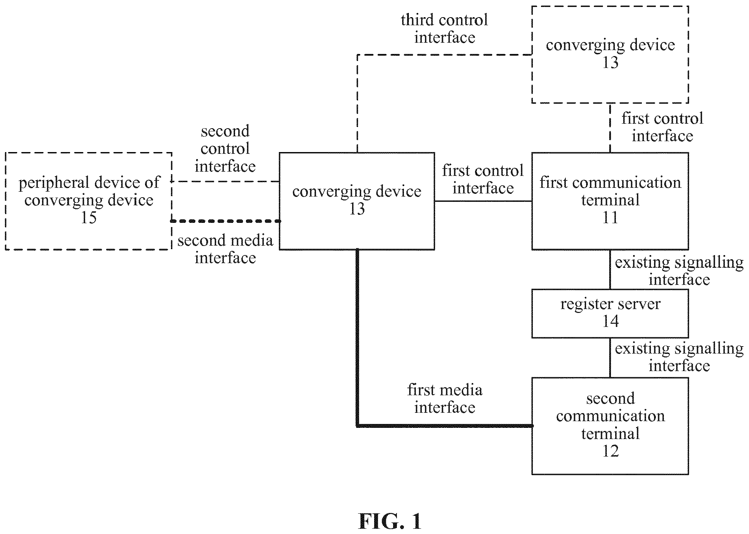

Fig. 1 is a schematic diagram of a framework for realizing multimedia communication according to an embodiment of the disclosure. As show in Fig. 1, the framework at least includes a first communication terminal 11, a second communication terminal 12, a converging device 13, and a register server 14.

The first communication terminal 11, as an UE, is configured to utilize a media description from the converging device 13 to initiate a call request to the register server 14, and establish a signaling plane between the first communication terminal 11 and the second communication terminal 12 upon reception of a call answer.

The converging device 13 is configured to send the media description to the first communication terminal 11, and establish a media plane between the converging device 13 and the second communication terminal 12.

The register server 14 is configured to notify the second communication terminal 12 of the call request upon reception of the call request, and forward the call answer from the second communication terminal 12 to the first communication terminal 11.

The second communication terminal 12, as an UE or a media server, is configured to return the call answer to the register server 14, establish the signaling plane between the second communication terminal 12 and the first communication terminal 11, and establish the media plane between the second communication terminal 12 and the converging device 13.

The first communication terminal 11 is further configured to, when a multimedia communication is to be established, initiate a query request to the converging device 13. Correspondingly, the converging device 13 is further configured to return the media description to the first communication terminal 11 upon reception of the query request from the first communication terminal 11, or the converging device 13 is configured to actively push the media description to the first communication terminal 11.

The media server may be a Video-On-Demand (VOD) server.

When the call request also carries a media plane description of the first communication terminal 11, in additional to the media plane established between the converging device 13 and the second communication terminal 12, the media plane established between the first communication terminal and the second communication terminal is included. The media plane may include one or more media stream.

If the second communication terminal 12 also establishes the call through the converging device 13, the media plane is established between the converging device of the first communication terminal 11 and the converging device of the second communication terminal 12.

Through the framework of the disclosure, the multimedia communication may be easily implemented by separating control from media.

In a case, a call has been successfully established and the media plane is established between the first communication terminal 11 and the second communication terminal 12, and the call switchover is to be performed.

In this case, the first communication terminal 11 is further configured to initiate the query request to the converging device 13 to which the call is currently to be switched, and initiate the switchover request to the register server 14 upon obtaining of the media description. Upon reception of the switchover acknowledgement, the first communication terminal 11 establishes the signaling plane between the first communication terminal 11 and the second communication terminal 12. Then, the media plane is switched to the converging device 13 to which the call is currently to be switched.

The register server 14 is further configured to, upon reception of the switchover request, notify the second communication terminal 12 of the switchover request, and forward the switchover acknowledgement from the second communication terminal 12 to the first communication terminal 11.

The UE is a communication enabled UE of a terminal type, such as a smartphone, a tablet-type Pad, a laptop or another user smart device.

The converging device 13 may be multimedia enabled, near field communication (NFC) enabled and remote communication enabled. Alternatively, the converging device 13 may be multimedia enabled and NFC enabled, but not remote communication enabled. At this point, the converging device 13 may be set in the UE as a functional unit.

It should be noted that, the NFC in this application may include Bluetooth, WLAN and NFC, but not limited to the specific NFC in the usual sense.

The first communication terminal 11 and the converging device 13 are connected through a first control interface, for example to transmit the media description. The first communication terminal 11 uses the first control interface to control the converging device 13. The signaling can be carried on multiple network connections, such as the Bluetooth, the WLAN and the NFC, between the first communication terminal and the peripheral devices, such as a television, a projector and a camera.

The second communication terminal 12 and the converging device 13 are connected through a first media interface. When the second communication terminal 12 is the UE, the RTP, the SRTP and the like are adopted generally. When the second communication terminal 12 is the media server, for example, a stream media server, a stream media is adopted. When the second communication terminal 12 is a session server, the stream media can be adopted.

An existing signaling interface is adopted between the first communication terminal 11 and the second communication terminal 12,and is not elaborated here.

The framework for realizing multimedia communication of the disclosure also includes the peripheral device 15 of the converging device. At this point, the converging device 13 is further configured to, upon reception of the query request from the first communication terminal 11, interact with its peripheral device 15 to obtain the media parameters, and forward the multimedia stream to its peripheral device 15.

The peripheral device 15 of the converging device is configured to provide the media parameters to the converging device 13, and render the content of the obtained media stream.

The peripheral device 15 of the converging device may be multimedia enabled and near field communication (such as Bluetooth, WLAN and NFC) enabled. When the converging device 13 is set in the UE as the functional unit, the peripheral device 15 of the converging device may further be remote communication enabled.

The peripheral device 15 of the converging device and the converging device 13 are connected through a second control interface. The converging device uses the second control interface to control its peripheral device. The relation between the converging device 13 and its peripheral device 15 can be infinitely expanded, that is, there are peripheral devices of the peripheral device.

The second control interface may be same as or different from the first control interface.

The second media interface used for forwarding the media may be set between the converging device 13 and the peripheral device 15 of the converging device. The forwarded media may be one or more media stream in the converging device, or a part of stream directions. For example, video streams of the converging device from the second communication terminal to the first communication terminal are forwarded to the peripheral device of the television.

There is one or more converging device 13 in the framework for realizing multimedia communication of the disclosure. When there are two or more converging devices 13, the converging devices are connected to each other through a third control interface. The third control interface is used for synchronous control of the media streams among the converging devices. For example, a picture of one converging device is synchronized with a voice of another converging device

In case that a media is already rendered in the converging device 13, upon the establishment of the current signaling plane and the media plane, the converging device 13 is further configured to render the current media together with the existing media, for example, by adopting a mode of Picture In Picture.

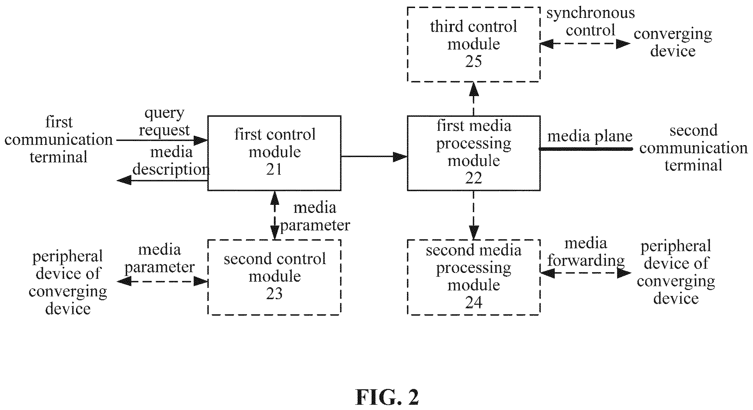

Fig. 2 is a structure diagram of a converging device according to an embodiment of the disclosure. As shown in Fig. 2, the converging device at least includes a first control module 21 and a first media processing module 22.

The first control module 21 is configured to send the media description to the first communication terminal.

The first media processing module 22 is configured to establish the media plane between the first media processing module 22 and the second communication terminal upon establishment of the call.

The first control module 21 is configured to, upon reception of the query request from the first communication terminal, return the media description to the first communication terminal, or actively push the media description to the first communication terminal.

The converging device of the disclosure may further include a second control module 23.

In this case, the first control module 21 is further configured to, upon reception of the query request from the first communication terminal, notify the second control module 23 of the query request. The second control module 23 is configured to interact with the peripheral device of the converging device to obtain the media parameters and return the obtained media parameters to the first control module 21.

The converging device of the disclosure may further include a second media processing module 24. The second media processing module 24 is configured to perform media forwarding between the converging device and the peripheral device of the converging device.

The converging device of the disclosure may further include a third control module 25. The third control module 25 is configured to perform synchronous control of the media streams among the other connected converging devices.

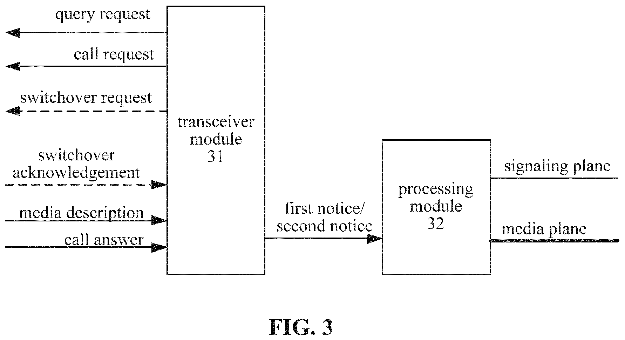

Fig. 3 is a structure diagram of a terminal according to an embodiment of the disclosure. As shown in Fig. 3, the terminal at least includes a transceiver module 31 and a processing module 32.

The transceiver module 31 is configured to utilize the media description from the converging device to initiate the call request to the register server, and output a first notice to the processing module 32 upon reception of the call answer.

The processing module 32 is configured to establish the signaling plane between the processing module 32 and the second communication terminal upon reception of the first notice.

The transceiver module 31 is further configured to, when a multimedia communication is to be established, initiate the query request to the converging device. The transceiver module 31 is further configured to initiate the query request to the converging device to which the call is currently to be switched, initiate the switchover request to the register server upon obtaining of the media description, and output a second notice to the processing module 32 upon reception of the switchover acknowledgement.

The processing module 42 is further configured to, upon reception of the second notice, establish the signaling plane between the processing module 42 and the second communication terminal. Then, the media plane is switched to the converging device to which the call is currently to be switched.

When the call request also carries the media plane description of the terminal to which the transceiver module belongs, the processing module 32 is further configured to establish the media plane between the processing module 32 and the second communication terminal.

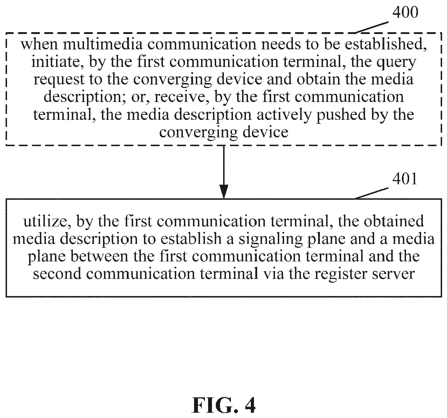

Fig. 4 is a flowchart of a method for realizing multimedia communication according to an embodiment of the disclosure. As shown in Fig. 4, the method includes the following steps.

In a step 401, the first communication terminal utilizes the obtained media description to establish the signaling plane between the first communication terminal and the second communication terminal via the register server. The converging device establishes the media plane between the converging device and the second communication terminal.

Before this step, the method may further include a step 400.

In the step 400, when a multimedia communication is to be established, the first communication terminal initiates the query request to the converging device and obtains the media description, or the first communication terminal receives the media description actively pushed by the converging device.

In a step 401, the first communication terminal utilizes the obtained media description to initiate the call request to the second communication terminal via the register server. The call request can use the signaling like SIP, for example, an Invite message.

The first communication terminal receives the call answer which is returned from the second communication terminal via the register server. For example, the call answer may be 200OK which can carry a Session Description Protocol (SDP) (in case an intermediate message carries the SDP answer, 200OK may not carry the SDP). The call answer may be a call failure.

At this point, the call is established between the first communication terminal and the second communication terminal. The signaling plane is established between the first communication terminal and the second communication terminal. The media plane is established between the converging device and the second communication terminal.

When the second communication terminal establishes the call through the converging device too, the media plane is established between the converging device of the first communication terminal and the converging device of the second communication terminal.

When the call request also carries the media plane description of the first communication terminal, upon establishment of the call, the method further includes establishing the media plane between the first communication terminal and the second communication terminal.

The established media plane may include one or more media stream.

According to an embodiment of the disclosure, the first communication terminal is an UE, and the second communication terminal is an UE or a media server.

The UE is a communication enabled UE of a terminal type, such as a smartphone, a tablet like Pad, a laptop or another user smart device.

The converging device may be multimedia enabled, and remote communication enabled. The converging device may be multimedia enabled, but not be remote communication enabled. At this point, the converging device may be set, as a functional unit, in the UE.

According to the method of the disclosure, the multimedia communication is easily implemented by separating control from media.

When a call has been successfully established and the media plane is established between the first communication terminal and the second communication terminal, and the call switchover is to be performed, the method may further include the following steps.

The first communication terminal initiates the query request to the converging device to which the call is currently to be switched, and initiates the switchover request to the register server upon obtaining of the media description. Upon reception of the switchover acknowledgement forwarded from the second communication terminal via the register server, the first communication terminal establishes the signaling plane between the first communication terminal and the second communication terminal. Then, the media plane is switched to the converging device to which the call is currently to be switched.

In case that the framework for realizing multimedia communication of the disclosure further includes the peripheral device of the converging device, when the converging device receives the query request from the first communication terminal, the method of the disclosure further includes: interacting, by the converging device, with the peripheral device of the converging device to obtain a media parameter.

After the step 401, the method further includes the following step. The converging device performs media forwarding between the converging device and the peripheral device of the converging device. That is, the converging device forwards the media stream to the peripheral device of the converging device. The peripheral device of the converging device renders the content of the obtained media stream. Here, the forwarded media may be one or more media stream in the converging device, or a part of stream directions. For example, the video streams of the converging device from the second communication terminal to the first communication terminal are forwarded to the peripheral device of the television.

The peripheral device of the converging device is multimedia enabled, and near field communication (such as the Bluetooth, the WLAN and the NFC) enabled. When the converging device is set in the UE as the functional unit, the peripheral device of the converging device is further remote communication enabled.

There is one or more converging device in the framework for realizing multimedia communication of the disclosure. When there are two or more than two converging devices, the established media plane includes two or more media streams. The establishment of the media plane between the converging device and the second communication terminal includes: different media streams being respectively established between the second communication terminal and the converging device corresponding to each media stream.

The method according the embodiment of the disclosure may also include synchronizing the media streams among multiple converging devices, for example, synchronizing a picture of one converging device with a voice of another converging device.

Before the step 401, when a media is already rendered in the converging device, upon the establishment of the current signaling plane and the media plane, the method further includes rendering, by the converging device, the current media together with the existing media, for example, by adopting a mode of Picture In Picture.

An elaboration is given below in combination with embodiments.

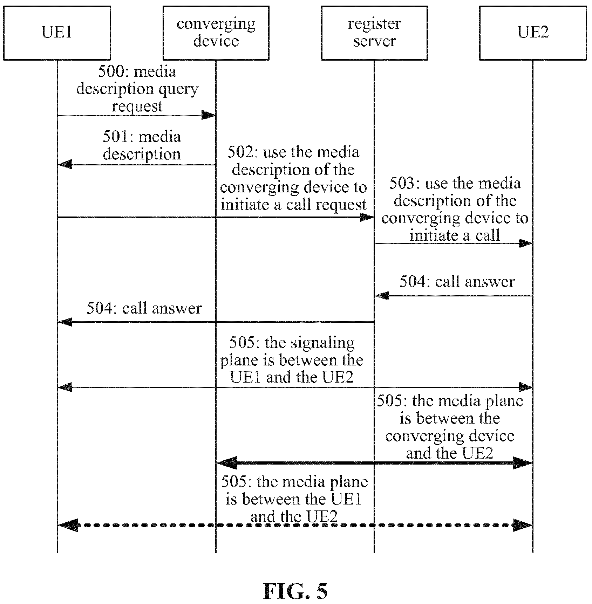

Fig. 5 is a flowchart of the first embodiment about establishing a converging device call according to the disclosure. In the first embodiment, it is assumed that the first communication terminal is UE1, and the second communication terminal is UE2; as shown in Fig. 5, the flow includes the following steps.

In a step 500, the UE1 sends the media description query request to the converging device.

In a step 501, the converging device returns the media description. The media description may be in a format of SDP.

In a step 502, the UE1 uses the media description of the converging device to initiate a call. The UE1 may use the signaling like SIP, for example, the Invite message.

At this point, the media plane description of the UE1 may also be carried.

In a step 503, the register server forwards the call request to the UE2.

In a step 504, the UE2 sends the call answer to the register server; and the register server forwards the call answer to the UE1.

In a step 505, the call is established. The signaling plane is established between the UE1 and the UE2. The media plane is established between the converging device and the UE2.

If in the step 503, the media plane description of the UE1 is carried, in additional to the media plane between the converging device and the UE2, the media plane in S505 includes the media plane established between the UE1 and the UE2 shown in Fig. 5.

It should be noted that, when UE performs network layer forwarding, for example, when the UE builds a WiFi hotspot to perform forwarding between 3G/4G networks and WiFi, the actual call media address is the address of the converging device (although the address is allocated by the UE through the WiFi hotspot). This scenario is still the scenario as shown in Fig. 5, where the media plane is between the converging device and the UE2.

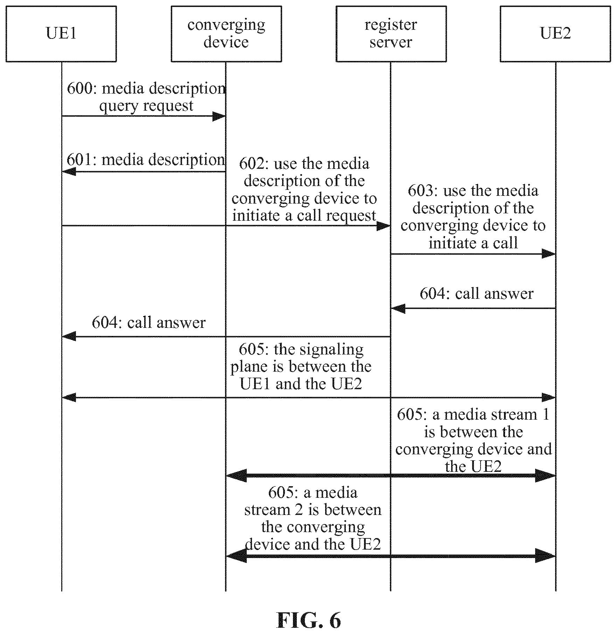

Fig. 6 is a flowchart of the second embodiment about establishing a converging device call according to the disclosure. In the second embodiment, it is assumed that the first communication terminal is UE1, and the second communication terminal is UE2; as shown in Fig. 6, the flow includes the following steps.

In a step 600, the UE1 sends the media description query request to the converging device.

In a step 601, the converging device returns the media description. The media description may be in the format of SDP.

In a step 602, the UE1 uses the media description of the converging device to initiate a call. The UE1 may use the signaling like SIP, for example, the Invite message.

In a step 603, the register server forwards the call request to the UE2.

In a step 604, the UE2 sends the call answer to the register server; and the register server forwards the call answer to the UE 1.

In a step S605, the call is established, the signaling plane is established between the UE1 and the UE2, and the media plane includes multiple media streams. In the embodiment, it is assumed that the media stream 1 is established between the converging device and the UE2, and the media stream 2 is established between the converging device and the UE2.

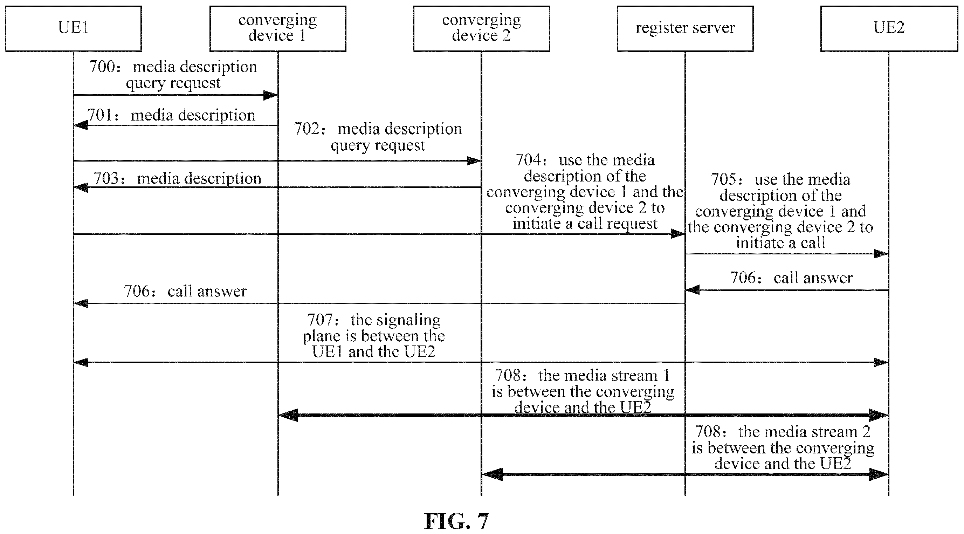

Fig. 7 is a flowchart of the third embodiment about establishing a converging device call according to the disclosure. In the third embodiment, it is assumed that the first communication terminal is UE1, the second communication terminal is UE2, and the UE1 uses multiple converging devices, e.g. the converging 1 and the converging 2 in Fig. 7. As shown in Fig. 7, the flow includes the following steps.

In a step 700, the UE1 sends the media description query request to the converging device 1.

In a step 701, the converging device 1 returns the media description. The media description may be in the format of SDP.

In a step 702, the UE1 sends the media description query request to the converging device 2.

In a step 703, the converging device 12 returns the media description. The media description may be in the format of SDP.

In a step 704, the UE1 uses the media description of the converging device 1 and the converging device 2 to initiate a call. The UE1 can use the signaling like SIP, for example, the Invite message.

In a step 706, the register server forwards the call request to the UE2.

In a step 707, the UE2 sends the call answer to the register server; and the register server forwards the call answer to the UE 1.

In a step 708, the call is established, the signaling plane is established between the UE1 and the UE2, the media stream 1 of the media plane is established between the converging device 1 and the UE2, and the media stream 2 of the media plane is established between the converging device 2 and the UE2.

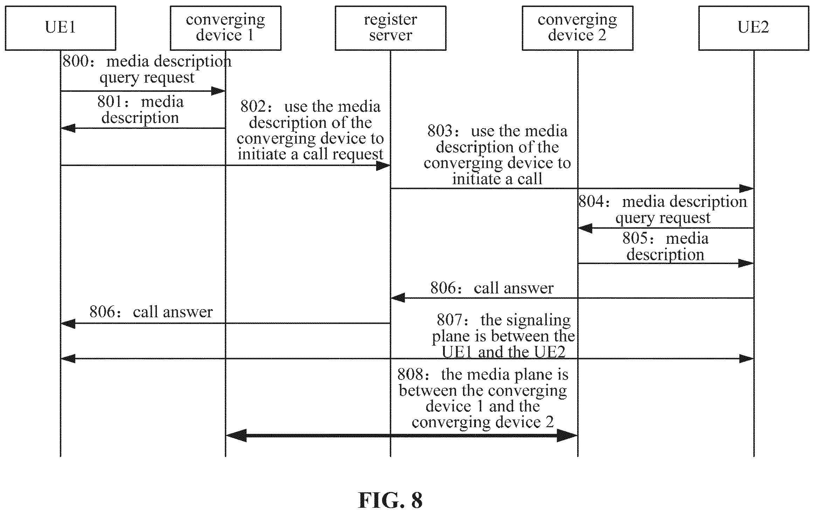

Fig. 8 is a flowchart of the fourth embodiment about establishing a converging device call according to the disclosure. In the fourth embodiment, it is assumed that the first communication terminal is UE1, the second communication terminal is UE2, and the UE1 and the UE2 use the converging device 1 and the converging device 2 to establish a call. As shown in Fig. 8, the flow further includes the following steps.

In a step 800, the UE1 sends the media description query request to the converging device 1.

In a step 801, the converging device 1 returns the media description. The media description can be in the format of SDP.

In a step 802, the UE1 uses the media description of the converging device 1 to initiate a call. The UE1 can use the signaling like SIP, for example, the Invite message.

In a step 803, the register server forwards the call request to the UE2.

In a step 804, the UE2 sends the media description query request to the converging device 2.

In a step 805, the converging device 2 returns the media description. The media description may be in the format of SDP.

In a step 806, the UE2 sends the call answer to the register server, and the register server forwards the call answer to the UE1.

In a step 807, the call is established, the signaling plane is established between the UE1 and the UE2, and the media plane is established between the converging device 1 and the converging device 2.

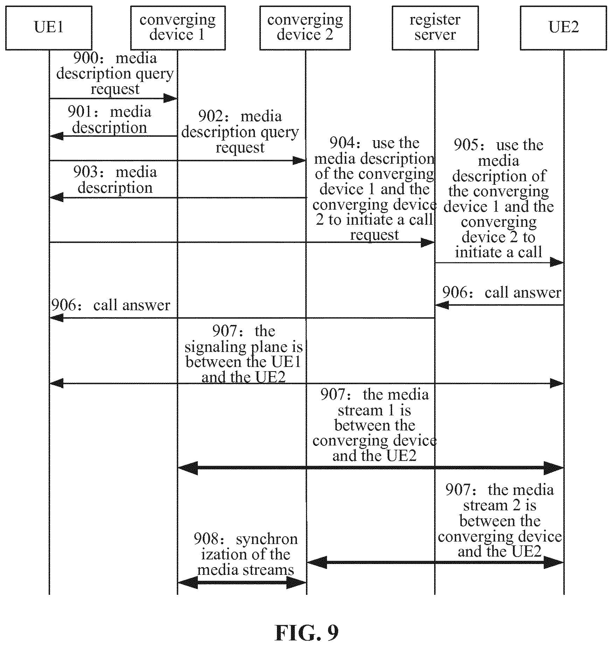

Fig. 9 is a flowchart of the fifth embodiment about establishing a converging device call according to the disclosure. In the fifth embodiment, it is assumed that the first communication terminal is UE1, the second communication terminal is UE2, and the UE1 uses multiple converging devices, e.g. the converging 1 and the converging 2 in Fig. 7. As shown in Fig. 9, the implementation of the steps 900 to 907 is identical to that of the third embodiment shown in Fig. 7, which is not elaborated here. The flow of the fifth embodiment differs from that of the third embodiment in that the flow of the fifth embodiment further includes the following step.

In a step 908, a media stream of the converging device 1 is synchronized with a media stream of the converging device 2, where the converging device 1 is separated from the converging device 2. For example, in case that the media stream in the converging device 1 is pictures and the media stream in the converging device 2 is voices, then the step 908 is the synchronization between the pictures and the voices.

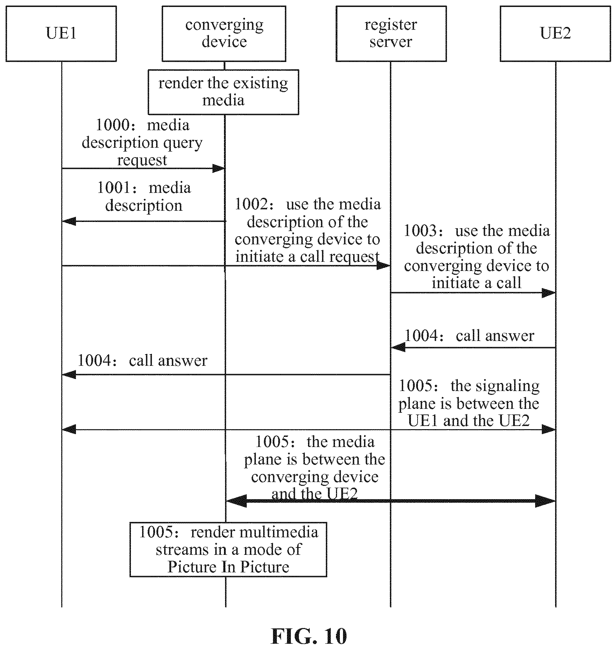

Fig. 10 is a flowchart of the sixth embodiment about establishing a converging device call according to the disclosure. In the sixth embodiment, it is assumed that the first communication terminal is UE1, the second communication terminal is UE2, and there has been the existing media on the converging device. As shown in Fig. 10, the flow includes the following steps.

In a step 1000, the UE1 sends the media description query request to the converging device.

In the embodiment, before the step 1000, an existing media is already on the converging device. For example, live television or video-on-demand (VOD) already exists on the converging device. Here, the existing media is a media with respect to a media which already exits or is to be established during the call. In other words, the existing media is a media not during the call.

In a step 1001, the converging media returns the media description. The media description may be in the format of SDP.

In a step 1002, the UE1 uses the media description of the converging device to initiate a call. The UE1 can use the signaling like SIP, for example, the Invite message.

In a step 1003, the register server forwards the call request to the UE2.

In a step 1004, the UE2 sends the call answer to the register server; and the register server forwards the call answer to the UE1.

In a step 1005: the call is established, the signaling plane is established between the UE1 and the UE2, and the media plane is established between the converging device and the UE2. In the embodiment, the converging device renders the media of the call together with the existing media in the step 1000. For example, the live television and the video call are rendered in the mode of Picture In Picture.

It should be noted, for example, a user 1 and a user 2 watch a live football match at the same time, establish and render a video call on the television (the converging device 1) in the mode of picture in picture, through the technical solution provided by the disclosure, for example, the embodiment shown in Fig. 10. Then, it is possible to establish a whiteboard connection on a Pad (the converging device 2), and use a stylus to draw an attack and defense sketch and share the sketch between the users. If holographic protection is further supported, it is even possible for the user 1 to use a holographic protector (the converging device 3) to demonstrate the actions of players to the user 2.

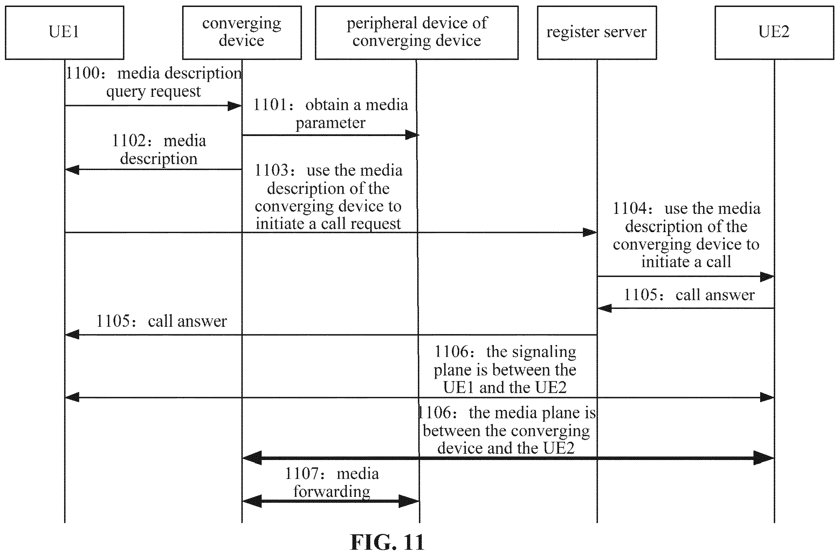

Fig. 11 is a flowchart of the seventh embodiment about establishing a converging device call according to the disclosure. In the seventh embodiment, it is assumed that the first communication terminal is UE1, the second communication terminal is UE2, and the converging device has the peripheral device; as shown in Fig. 11, the flow includes the following steps.

In a step 1100, the UE1 sends the media description query request to the converging device.

In a step 1101, the converging device interacts with the peripheral device of the converging device to obtain a media parameter.

In a step 1102, the converging device returns the media description. The media description may be in the format of SDP.

In a step 1103, the UE1 uses the media description of the converging device to initiate a call. The UE1 can use the signaling like SIP, for example, the Invite message.

In a step 1104, the register server forwards the call request to the UE2.

In a step 1105, the UE2 sends the call answer to the register server; and the register server forwards the call answer to the UE1.

In a step 1106, the call is established, the signaling plane is established between the UE1 and the UE2, and the media plane is established between the converging device and the UE2.

In a step 1107, media forwarding is performed between the converging device and the peripheral device. The forwarding can be performed to a certain stream direction of a part of media streams, for example, between a set-top box (the converging device) and the television (the peripheral device of the converging device). The set-top box forwards only the video stream from the UE2 to the UE1 to the television, and the set-top box may use the camera to implement the video stream from the UE1 to the UE2.

It should be noted that, if the call request is the call initiated by using a network address of the peripheral device of the converging device, the media plane will be established between the peripheral device of the converging device and the UE2. But in this case, it may be possible to regard the converging device and the peripheral device of the converging device as a whole (as the converging device), namely the embodiment shown in Fig. 5.

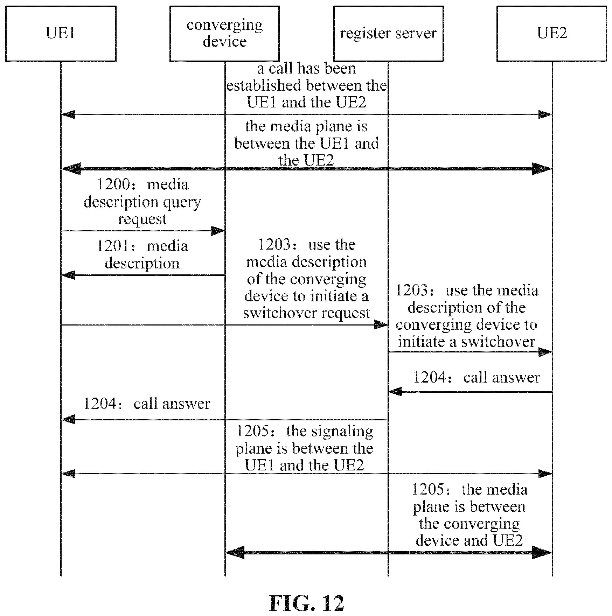

Fig. 12 is a flowchart of the first embodiment about media plane switchover in a converging device call according to the disclosure. In the present embodiment, it is assumed that the first communication terminal is UE1, the second communication terminal is UE2, and the call has been established between the UE1 and the UE2, and the media plane is also between the UE1 and the UE2. As shown in Fig. 12, the flow includes the following steps.

In a step 1200, the UE sends the media description query request to the converging device.

This step can be triggered when the user enters, from the outside, into an environment with WLAN, and hopes to switch the call to the television to perform a high-definition video call.

Before this step, the call has been established between the UE1 and the UE2. For example, a call of VoLTE is established through IMS. The media plane is between the UE1 and the UE2, and for example, is carried on the LTE.

In a step 1201, the converging device returns the media description. The media description may be in the format of SDP.

In a step 1202, the UE1 uses the media description of the converging device to initiate a media switchover request. The UE1 can use the signaling like SIP, for example, Re-INVITE, or UPDATE.

In a step 1203, the register server forwards the switchover request to the UE2.

In a step 1204, the UE2 sends a media switchover acknowledgement to the register server, for example 200OK of Re-INVITE or UPDATE. The register server forwards the media switchover acknowledgement to the UE1.

In a step 1205, the switchover is completed at this point. The signaling plane is between the UE1 and the UE2. The media plane is switched to be between the converging device and the UE2.

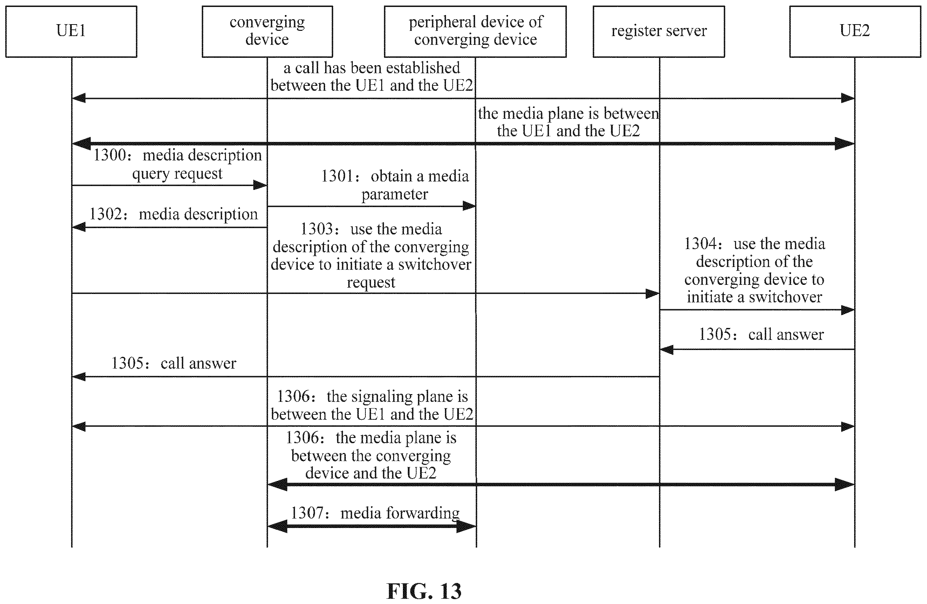

Fig. 13 is a flowchart of the second embodiment about media plane switchover in a converging device call according to the disclosure. In the embodiment, it is assumed that the first communication terminal is UE1, the second communication terminal is UE2, and the converging device has a peripheral device. In the embodiment, it is assumed that the call has been established between the UE1 and the UE2, and the media plane is also between the UE1 and the UE2. As shown in Fig. 13, the flow includes the following steps.

In a step 1300, the UE1 sends the media description query request to the converging device.

Before this step, the call has been established between the UE1 and the UE2. For example, the call of VoLTE is established through IMS. The media plane is between the UE1 and the UE2, and for example, is carried on the LTE.

In a step 1301, the converging device interacts with the peripheral device of the converging device to obtain a media parameter.

In a step 1302, the converging device returns the media description. The media description may be in the format of SDP.

In a step 1303, the UE1 uses the media description of the converging device to initiate a call. The UE1 can use the signaling like SIP, for example, the Invite message.

In a step 1304, the register server forwards the call request to the UE2.

In a step 1305, the UE2 sends the call answer to the register server; and the register server forwards the call answer to the UE1.

In a step 1306, the call is completed at this point. The signaling plane is still between the UE1 and the UE2. The media plane is switched to be between the converging device and the UE2.

In a step 1307, media forwarding is performed between the converging device and the peripheral device. The forwarding can be performed to a certain stream direction of a part of media streams, for example, between a set-top box (the converging device) and the television (the peripheral device of the converging device). The set-top box forwards only the video stream from the UE2 to the UE1 to the television, and the set-top box may control the camera to implement the video stream from the UE1 to the UE2.

It should be noted that, if the call request is the call initiated by using the network address of the peripheral device of the converging device, the media plane will be established between the peripheral device of the converging device and the UE2. But in this case, it may be possible to regard the converging device and the peripheral device of the converging device as a whole (as the converging device), namely the embodiment shown in Fig. 5.

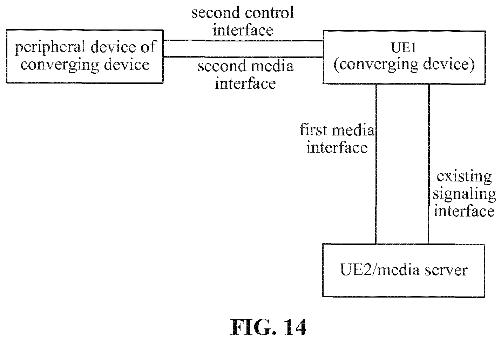

Fig. 14 is a schematic diagram of another framework for realizing multimedia communication according to an embodiment of the disclosure. As shown in Fig. 4, in the framework, the converging device is set in the UE as a functional unit. At this point, the converging device is multimedia enabled, but is not remote communication enabled. Preferably, the framework is especially applied to the application scenario of some projection devices like the holographic protector supporting the NFC.

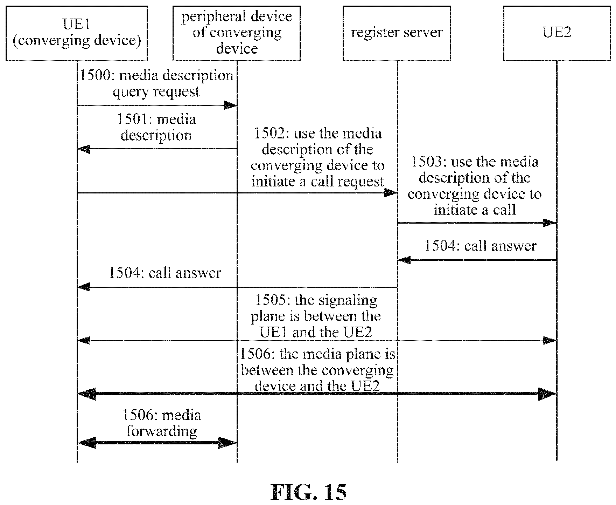

Fig. 15 is a flowchart of an embodiment about establishing a converging device call based on the framework shown in Fig. 14 according to the disclosure. In the embodiment, it is assumed that the converging device is set in the UE1. As shown in Fig. 15, the flow includes the following steps.

In a step 1500, the UE1 sends the media description query request to the converging device.

In a step 1501, the peripheral device of the converging device returns the media description. The media description may be in the format of SDP.

In a step 1502, the UE1 uses the media description of the peripheral device of the converging device to initiate a call. The UE1 can use the signaling like SIP, for example, the Invite message.

In a step 1503, the register server forwards the call request to the UE2.

In a step 1504, the UE2 sends the call answer to the register server, and the register server forwards the call answer to the UE1.

In a step 1505, the call is established, the signaling plane is established between the UE1 and the UE2, and the media plane is established between the converging device and the UE2.

In a step 1506, media forwarding is performed between the UE1 and the peripheral device of the converging device.

Those ordinary skilled in the art can understand that all or a part of steps of the above embodiments can be performed by using a computer program flow. The computer program can be stored in a computer readable storage medium. The computer program, when executed on corresponding hardware platforms (such as system, installation, equipment and device) performs one of or a combination of the steps in the method.

Optionally, all or a part of steps of the above embodiments can also be performed by using an integrated circuit. These steps may be respectively made into integrated circuit modules. Alternatively, multiple modules or steps may be made into a single integrated circuit module.

The devices/function modules/function units in the above embodiment can be realized by using a general computing device. The devices/function modules/function units can be either integrated on a single computing device, or distributed on a network composed of multiple computing devices.

When the devices/function modules/function units in the above embodiment are realized in form of software function module and sold or used as an independent product, they can be stored in a computer-readable storage medium. The computer-readable storage medium may be an ROM, a magnetic disk or a compact disk.

### INDUSTRIAL APPLICABILITY

In the embodiments of the present disclosure, a first communication terminal utilizes an obtained media description to establish a signaling plane between the first communication terminal and a second communication terminal via a register server. A converging device establishes a media plane between the converging device and the second communication terminal. The multimedia communication is easily implemented by separating control from media.

## Claims

1. A framework for realizing multimedia communication, the framework comprising:
a first communication terminal, a second communication terminal, a converging device, and a register server; wherein,
the first communication terminal is configured to utilize a media description from the converging device to initiate a call request to the register server, and upon reception of a call answer, establish a signaling plane between the first communication terminal and the second communication terminal;
the converging device is configured to send the media description to the first communication terminal, and establish a media plane between the converging device and the second communication terminal;
the register server is configured to notify the second communication terminal of the call request upon reception of the call request, and forward the call answer from the second communication terminal to the first communication terminal; and
the second communication terminal is configured to return the call answer to the register server, establish the signaling plane between the second communication terminal and the first communication terminal, and establish the media plane between the second communication terminal and the converging device.

2. The framework according to claim 1, wherein,
the first communication terminal is further configured to, when a multimedia communication is to be established, initiate a query request to the converging device;
correspondingly, the converging device is further configured to return the media description to the first communication terminal upon reception of the query request from the first communication terminal; or the converging device is further configured to actively push the media description to the first communication terminal.

3. The framework according to claim 2, further comprising: a peripheral device of the converging device;
wherein the converging device is further configured to, upon reception of the query request from the first communication terminal, interact with the peripheral device of the converging device to obtain a media parameter, and forward a media stream to the peripheral device of the converging device;
the peripheral device of the converging device is configured to provide the media parameter to the converging device, and render the content of the media stream.

4. The framework according to claim 1 or 3, wherein,
the first communication terminal is further configured to, when a call has been successfully established and the media plane is established between the first communication terminal and the second communication terminal, and a call switchover is to be performed, initiate the query request to the converging device to which the call is currently to be switched, and upon obtaining of the media description, initiate a switchover request to the register server;
the first communication terminal is further configured to, upon reception of a switchover acknowledgement, establish the signaling plane between the first communication terminal and the second communication terminal, the media plane being switched to the converging device to which the call is currently to be switched; and
the register server is further configured to, upon reception of the switchover request, notify the second communication terminal of the switchover request, and forward the switchover acknowledgement from the second communication terminal to the first communication terminal.

5. The framework according to claim 1 or 3, wherein the converging device is further configured to, when an existing media is already rendered in the converging device, render a current media together with the existing media upon establishment of the signaling plane and the media plane.

6. The framework according to claim 1, wherein when the second communication terminal establishes the call through the converging device, the media plane is established between the converging device of the first communication terminal and the converging device of the second communication terminal.

7. The framework according to claim 1 or 3 or 6, wherein the call request carries a media plane description of the first communication terminal;
the media plane is further established between the first communication terminal and the second communication terminal.

8. The framework according to claim 7, wherein the media plane comprises one or more media stream.

9. The framework according to claim 1 or 3, wherein the first communication terminal is a user equipment (UE);
the second communication terminal is an UE or a media server.

10. The framework according to claim 9, wherein the UE is a communication enabled UE of a terminal type;
the converging device is multimedia enabled, Near Field Communication (NFC) enabled and remote communication enabled; or, the converging device is multimedia enabled and NFC enabled, but is not remote communication enabled, wherein, the converging device is set, as a functional unit, in the UE.

11. The framework according to claim 1 or 3, wherein the first communication terminal is connected to the converging device through a first control interface, and the first control interface is used by the first communication terminal to control the converging device;
the second communication terminal is connected to the converging device through a first media interface.

12. The framework according to claim 11, wherein when the second communication terminal is an UE, the first media interface adopts a Real-time Transport Protocol (RTP) or a Secure Real-time Transport Protocol (SRTP);
when the second communication terminal is a media server, a second media interface adopts a streaming media or a media stream.

13. The framework according to claim 3, wherein the peripheral device of the converging device is multimedia enabled and NFC enabled;
when the converging device is set in the UE as the functional unit, the peripheral device of the converging device is further remote communication enabled.

14. The framework according to claim 3 or 13, wherein the peripheral device of the converging device is connected to the converging device through a second control interface, and the second control interface is used by the converging device to control the peripheral device of the converging device.

15. The framework according to claim 14, wherein a second media interface used for perform media forwarding is further set between the converging device and the peripheral device of the converging device.

16. The framework according to claim 1 or 3, wherein there is one or more converging device.

17. The framework according to claim 1 or 3, wherein there are two or more converging devices; the converging devices are connected to each other through a third control interface, and the third control interface is used to perform synchronous control of the media streams among the converging devices.

18. A converging device, comprising a first control module and a first media processing module; wherein,
the first control module is configured to send a media description to a first communication terminal;
the first media processing module is configured to, upon establishment of a call, establish a media plane between the converging device and a second communication terminal.

19. A terminal, comprising a transceiver module and a processing module; wherein,
the transceiver module is configured to utilize a media description from a converging device to initiate a call request to a register server, and upon reception of a call answer, output a first notice to the processing module;
the processing module is configured to establish a signaling plane between said terminal and a second communication terminal upon reception of the first notice.

20. A method for realizing multimedia communication, the method comprising:
utilizing, by a first communication terminal, an obtained media description to establish a signaling plane between the first communication terminal and a second communication terminal via a register server; and
establishing, by a converging device, a media plane between the converging device and the second communication terminal.

21. The method according to claim 20, wherein before utilizing, by the first communication terminal, the obtained media description to establish the signaling plane between the first communication terminal and the second communication terminal via the register server, further comprises:
when a multimedia communication is to be established, initiating, by the first communication terminal, a query request to the converging device and obtaining the media description;
or, receiving, by the first communication terminal, the media description actively pushed by the converging device.

22. The method according to claim 20, wherein when a call has been successfully established and the media plane is established between the first communication terminal and the second communication terminal, and a call switchover is to be performed, the method further comprises:
initiating, by the first communication terminal, the query request to the converging device to which the call is currently to be switched, and a switchover request to the register server upon obtaining of the media description; upon reception of a switchover acknowledgement forwarded from the second communication terminal via the register server, establishing the signaling plane between the first communication terminal and the second communication terminal; the media plane being switched to the converging device to which the call is currently to be switched.

23. The method according to claim 21, wherein when the converging device receives the query request from the first communication terminal, the method further comprises:
interacting, by the converging device, with the peripheral device of the converging device to obtain a media parameter.

24. The method according to claim 23, further comprising: performing, by the converging device, media forwarding between the converging device and the peripheral device of the converging device.

25. A computer readable storage medium, in which a computer executable instruction is stored; the computer executable instruction is used for performing a method according to any one of claims 20 to 24.
